# EUROPÄISCHE PATENTSCHRIFT

(11) **EP 3 676 132 B1**
(45) Veröffentlichungstag und Bekanntmachung des Hinweises auf die Patenterteilung: **14.07.2021**
(21) Anmeldenummer: 18756401.8
(22) Anmeldetag: 10.08.2018
(51) Int. Cl.: B60R 21/203

(54) **FEDERELEMENT ZUR BEFESTIGUNG EINES GASSACKMODULS AN EINEM FAHRZEUGLENKRAD SOWIE LENKRADBAUGRUPPE MIT EINEM SOLCHEN FEDERELEMENT**
SPRING ELEMENT FOR FASTENING AN AIR BAG MODULE TO A VEHICLE STEERING WHEEL, AND STEERING WHEEL ASSEMBLY COMPRISING SUCH A SPRING ELEMENT
ÉLÉMENT RESSORT POUR LA FIXATION D'UN MODULE DE COUSSIN GONFLABLE À UN VOLANT DE VÉHICULE AINSI QU'ENSEMBLE VOLANT POURVU DUDIT ÉLÉMENT RESSORT

(30) Priorität: 30.08.2017 DE 102017119886
(43) Veröffentlichungstag der Anmeldung: 08.07.2020
(60) Teilanmeldung: 21177020.1
(73) Patentinhaber: ZF Automotive Safety Germany GmbH, 63743 Aschaffenburg (DE)
(72) Erfinder: BACHMANN, Stefan, 63872 Heimbuchenthal (DE)
(74) Vertreter: ZF Patentabteilung - DIPS
(86) Internationale Anmeldenummer: PCT/EP2018/071769
(87) Internationale Veröffentlichungsnummer: WO 2019/042744

(56) Entgegenhaltungen:
- EP-A1- 1 179 457
- GB-A- 2 385 834
- JP-A- 2002 002 433

## Beschreibung

Die Erfindung betrifft ein Federelement zur Befestigung eines Gassackmoduls an einem Fahrzeuglenkrad mit einem ersten Federabschnitt, der sich von einem Werkzeugangriffspunkt über eine erste Lagerstelle bis zu einem ersten freien Federende erstreckt, sowie einem zweiten Federabschnitt, der sich vom Werkzeugangriffspunkt über eine zweite Lagerstelle bis zu einem zweiten freien Federende erstreckt, wobei der Werkzeugangriffspunkt von einer Verbindungsstrecke zwischen den beiden freien Federenden beabstandet und in einer Betätigungsrichtung zur Verbindungsstrecke hin verschieblich ist.

Ferner betrifft die Erfindung auch eine Lenkradbaugruppe mit einem solchen Federelement.

Um ein Gassackmodul an einem Fahrzeuglenkrad zu montieren, sind in der Kraftfahrzeugindustrie derzeit Rastverbindungen weit verbreitet, bei denen beispielsweise dem Gassackmodul starre Rasthaken und einem Lenkradskelett des Fahrzeuglenkrads elastische Federbügel zugeordnet sind. Mit Bezug auf eine Lenkradachse kann das Gassackmodul dabei durch axialen Druck in Richtung zum Lenkradskelett hin schnell und einfach am Fahrzeuglenkrad verrastet werden, wodurch eine sehr zuverlässige und widerstandsfähige Modulbefestigung entsteht.

Bei einem gewünschten Austausch des Gassackmoduls sowie bei Wartungs- oder Reparaturarbeiten am Fahrzeuglenkrad muss das eingebaute Gassackmodul allerdings zunächst wieder demontiert werden, was sich bisher aus unterschiedlichen Gründen als problematisch erweist. Beispielsweise ist die Demontage nur mit Spezialwerkzeug möglich, mit einem unerwünscht großen Bauraumbedarf im Fahrzeuglenkrad und/oder einem hohen Kraft- oder Zeitaufwand für den Monteur verbunden.

So ist zum Beispiel in der EP 1 179 457 A1 ein gattungsgemäßes Federelement zur Befestigung eines Gassackmoduls an einem Fahrzeuglenkrad offenbart, mit einem Mittelarm zum Betätigen des Federelements und zwei gegenüberliegenden Seitenarmen zum Verrasten des Federelements mit zugeordneten Rasthaken, wobei die Seitenarme jeweils ein schräges Teilstück aufweisen, das an eine Anschlagoberfläche angrenzt. Bei einer Demontage des Gassackmoduls führt das gesamte Federelement eine translatorische Bewegung aus, wobei die schrägen Teilstücke gegen die Anschlagoberflächen beaufschlagt werden und an diesen entlang gleiten. Dabei wird das Federelement so verformt, dass sich die Seitenarme zur Freigabe der Rasthaken voneinander weg oder aufeinander zu bewegen. Um die translatorische Bewegung des gesamten Federelements zu ermöglichen, ist jedoch innerhalb der Lenkradbaugruppe ein unerwünscht großer Bauraum in der Betätigungsrichtung nötig. Ferner sind aufgrund der Reibung und notwendigen Verformung des Federelements ein besonders hoher Kraftaufwand des Monteurs sowie sehr robuste Anschlagoberflächen erforderlich, um die Rasthaken in der oben beschriebenen Weise freizugeben.

GB 2 385 834 offenbart ein Federelement zur Befestigung eines Gassackmoduls an einem Fahrzeuglenkrad, mit einem ersten Federabschnitt, der sich von einem Werkzeugangriffspunkt über eine erste Lagerstelle bis zu einem ersten freien Federende erstreckt, sowie einem zweiten Federabschnitt, der sich vom Werkzeugangriffspunkt über eine zweite Lagerstelle bis zu einem zweiten freien Federende erstreckt, wobei der Werkzeugangriffspunkt von einer Verbindungsstrecke zwischen den beiden freien Federenden beabstandet und in einer Betätigungsrichtung zur Verbindungsstrecke hin verschieblich ist.

Aufgabe der Erfindung ist es, ein Federelement zu schaffen, mit dem ein Gassackmodul über eine Rastverbindung schnell und zuverlässig an einem Fahrzeuglenkrad montiert, aber auch wieder mit geringem Aufwand vom Fahrzeuglenkrad demontiert werden kann.

Erfindungsgemäß wird diese Aufgabe gelöst durch ein Federelement der eingangs genannten Art, bei dem die Federabschnitte so geformt sind, dass sich die freien Federenden bei einer Verschiebung des Werkzeugangriffspunkts in der Betätigungsrichtung voneinander weg oder aufeinander zu bewegen, wenn die erste Lagerstelle und die zweite Lagerstelle im Wesentlichen unverschieblich in Betätigungsrichtung gehalten sind. Aufgrund der in Betätigungsrichtung weitgehend unverschieblich gehaltenen Lagerstellen erfolgt zwischen den Lagerstellen und den freien Federenden keine translatorische Bewegung des Federelements in Betätigungsrichtung, sodass sich ein Bauraumbedarf für das Federelement deutlich verringert. Eine solche Translation ist im Übrigen funktional auch nicht notwendig, da zur Freigabe von Rasthaken eine Bewegung der freien Federenden voneinander weg oder aufeinander zu ausreicht.

Vorzugsweise sind die beiden Federabschnitte bezüglich einer durch den Werkzeugangriffspunkt verlaufenden Federachse im Wesentlichen symmetrisch ausgebildet, insbesondere wobei die Betätigungsrichtung mit einer Axialrichtung der Federachse übereinstimmt.

Gemäß einer Ausführungsform des Federelements ist zwischen den beiden Lagerstellen mindestens ein schraubenförmig gewickelter Federabschnitt vorgesehen. Über das Material, die Materialdicke, die Wicklungszahl und/oder den Wicklungsdurchmesser des schraubenförmig gewickelten Federabschnitts lässt sich die Elastizität des Federelements beeinflussen und damit beispielsweise eine gewünschte Betätigungskraft einstellen.

Der Werkzeugangriffspunkt kann dabei an dem mindestens einen gewickelten Federabschnitt vorgesehen sein. Alternativ ist auch denkbar, dass zwischen den beiden Lagerstellen zwei schraubenförmig gewickelte Federabschnitte vorgesehen sind, wobei der Werkzeugangriffspunkt zwischen diesen beiden Federabschnitten, insbesondere im Wesentlichen mittig zwischen den beiden Federabschnitten angeordnet ist.

Gemäß einer bevorzugten Ausführungsform überkreuzen sich der erste Federabschnitt und der zweite Federabschnitt. Dadurch werden die freien Federenden bei einer Betätigung des Federelements am Werkzeugangriffspunkt in Betätigungsrichtung aufeinander zu bewegt, wodurch sich eine kompakte Bauweise des Federelements in Radialrichtung ergibt. Ferner ergeben sich aufgrund der Überkreuzung längere Hebelarme zwischen der Lagerstelle und dem jeweils zugeordneten freien Federende.

Vorzugsweise ist das Federelement als einstückiges Bauteil aus gebogenem Federdraht hergestellt. Draht ist zum Beispiel über seinen Querschnitt oder seine Materialzusammensetzung in seinen Eigenschaften einfach anpassbar sowie mit geringem Aufwand individuell formbar und preiswert herstellbar.

Gemäß einer weiteren Ausführungsform des Federelements erstreckt sich zwischen der Lagerstelle und dem zugeordneten freien Federende der Federabschnitte jeweils ein Federschenkel, der einen Rastabschnitt aufweist. Der Rastabschnitt des Federschenkels grenzt vorzugsweise unmittelbar an das freie Federende an und kann sich darüber hinaus im Wesentlichen parallel zur Federachse erstrecken. Da das Federelement gleich hinter den Rastabschnitten endet, ergibt sich in vorteilhafter Weise ein besonders geringer Bauraumbedarf.

Vorzugsweise ist in dieser Ausführungsform ein Abstand zwischen der Lagerstelle und dem zugeordneten Rastabschnitt größer, insbesondere wenigstens dreimal größer, als ein Abstand zwischen der Lagerstelle und dem Werkzeugangriffspunkt. Bei einer Betätigung des Federelements zur Demontage des Gassackmoduls vom Fahrzeuglenkrad ist folglich ein Betätigungsweg am Werkzeugangriffspunkt kleiner, insbesondere deutlich kleiner als ein Entriegelungsweg der Rastabschnitte.

Die Federschenkel des Federelements sind beispielsweise im Wesentlichen förmig ausgebildet. Dadurch wird ein zentraler Nabenbereich des Fahrzeuglenkrads nicht vom Federelement gekreuzt, sodass in diesem Bereich ungestört ein Gasgenerator sowie dessen elektrische Zuleitungen vorgesehen werden können.

Die Erfindung umfasst ferner eine Lenkradbaugruppe eines Fahrzeugs, mit einem oben beschriebenen Federelement sowie einer Baugruppenkomponente, an der das Federelement befestigt ist, wobei die Baugruppenkomponente ein an die erste Lagerstelle angrenzendes Federlager und ein an die zweite Lagerstelle angrenzendes, weiteres Federlager aufweist. Die Federlager sind bevorzugt als Drehlager oder Radiallager ausgeführt, die ausschließlich eine Rotation des Federelements erlauben. Insbesondere sind keine Gleitlager vorgesehen, die eine translatorische Bewegung des gesamten Federelements in Betätigungsrichtung erlauben würden.

In einer Ausführungsform der Lenkradbaugruppe ist die Baugruppenkomponente ein Lenkradskelett, ein Gassackmodul oder ein separates Befestigungselement, welches am Lenkradskelett oder am Gassackmodul fest montierbar ist.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine perspektivische Ansicht eines erfindungsgemäßen Federelements zur Befestigung eines Gassackmoduls an einem Fahrzeuglenkrad;
- Figur 2 eine Draufsicht sowie Seitenansichten des Federelements gemäß Figur 1;
- Figur 3 eine perspektivische Ansicht einer erfindungsgemäßen Lenkradbaugruppe mit einem montierten Federelement gemäß den Figuren 1 und 2;
- Figur 4 eine Draufsicht der Lenkradbaugruppe gemäß Figur 3;
- Figur 5 eine Draufsicht eines Werkzeugs und der Lenkradbaugruppe gemäß Figur 3 in einem verriegelten Zustand;
- Figur 6 eine Draufsicht eines Werkzeugs und der Lenkradbaugruppe gemäß Figur 3 in einem entriegelten Zustand;
- Figur 7 eine perspektivische Ansicht des Werkzeugs und der Lenkradbaugruppe gemäß Figur 5;
- Figur 8 einen Schnitt durch eine erfindungsgemäße Lenkradbaugruppe mit einem montierten Federelement gemäß den Figuren 1 und 2; und
- Figur 9 einen Detailausschnitt der Figur 8 im Bereich eines Werkzeugangriffspunkts.

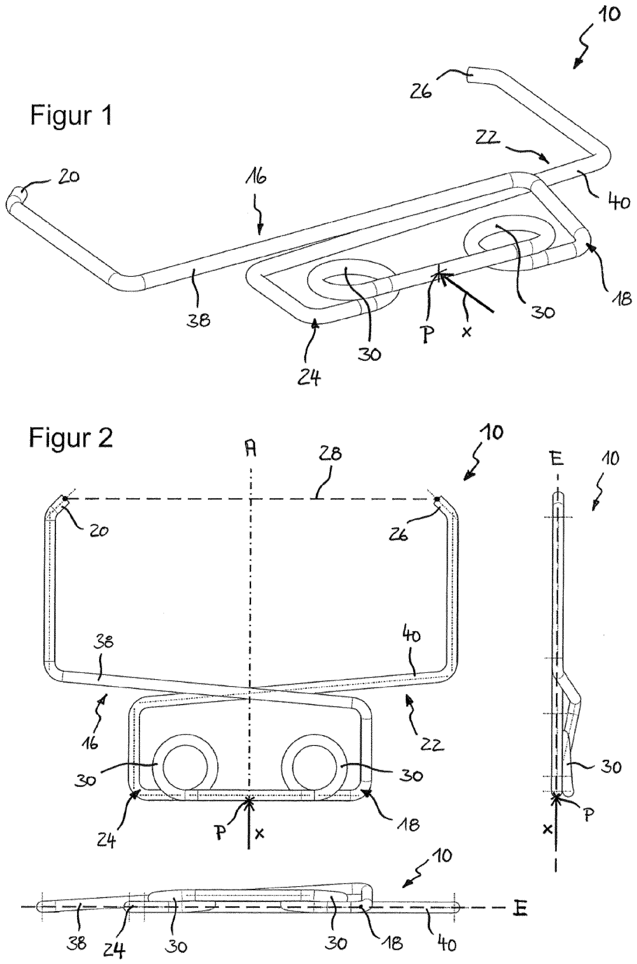

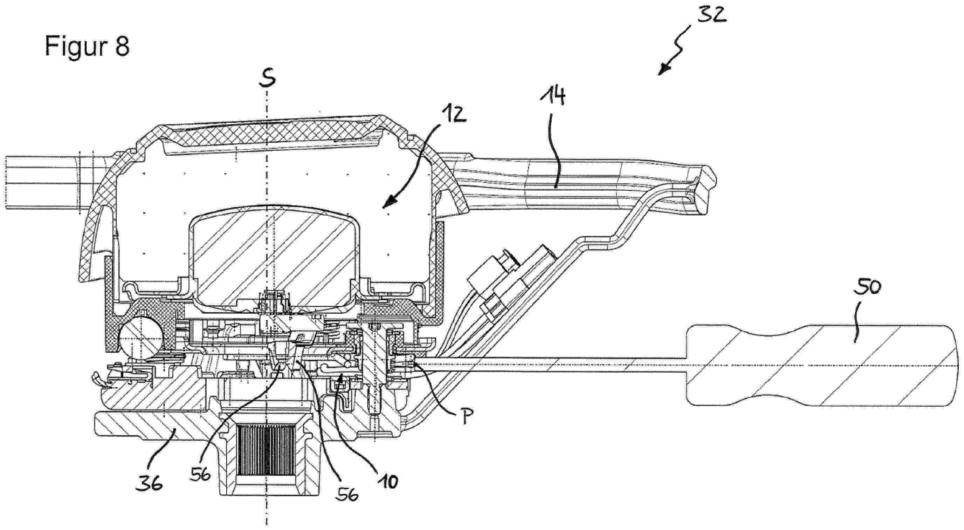

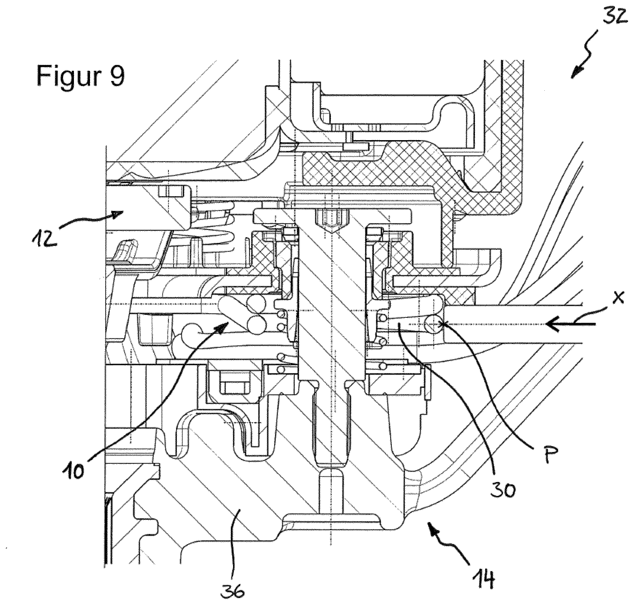

Die Figuren 1 und 2 zeigen ein Federelement 10 zur Befestigung eines Gassackmoduls 12 an einem Fahrzeuglenkrad 14 (siehe auch Figuren 8 und 9), mit einem ersten Federabschnitt 16, der sich von einem Werkzeugangriffspunkt P über eine erste Lagerstelle 18 bis zu einem ersten freien Federende 20 erstreckt, sowie einem zweiten Federabschnitt 22, der sich vom Werkzeugangriffspunkt P über eine zweite Lagerstelle 24 bis zu einem zweiten freien Federende 26 erstreckt, wobei der Werkzeugangriffspunkt P von einer Verbindungsstrecke 28 zwischen den beiden freien Federenden 20, 26 beabstandet und in einer Betätigungsrichtung x zur Verbindungsstrecke 28 hin verschieblich ist. Dabei sind die Federabschnitte 16, 22 so geformt sind, dass sich die freien Federenden 20, 28 bei einer Verschiebung des Werkzeugangriffspunkts P in der Betätigungsrichtung x aufeinander zu oder voneinander wegbewegen, wenn die erste Lagerstelle 18 und die zweite Lagerstelle 24 im Wesentlichen unverschieblich in Betätigungsrichtung x gehalten sind.

Das Federelement 10 ist hier ein einstückiges Bauteil aus einem gebogenen Federdraht und folglich einfach und preiswert herstellbar.

Die beiden Federabschnitte 16, 22 sind bezüglich einer durch den Werkzeugangriffspunkt P verlaufenden Federachse A im Wesentlichen symmetrisch ausgebildet, wobei die Betätigungsrichtung x mit einer Axialrichtung der Federachse A übereinstimmt.

Gemäß den Figuren 1 und 2 sind zwischen den beiden Lagerstellen 18, 24 des Federelements 10 zwei schraubenförmig gewickelte Federabschnitte 30 vorgesehen, wobei der Werkzeugangriffspunkt P zwischen diesen beiden gewickelten Federabschnitten 30 angeordnet ist.

Im Allgemeinen ist zwischen den beiden Lagerstellen 18, 24 vorzugsweise mindestens ein schraubenförmig gewickelter Federabschnitt 30 vorhanden, um bei einer vorbestimmten Betätigungskraft in Betätigungsrichtung x eine gewünschte elastische Verformung des Federelements 10 sicherzustellen. Dementsprechend sind alternativ zum dargestellten Ausführungsbeispiel auch Ausführungsformen des Federelements 10 denkbar, bei denen der Werkzeugangriffspunkt P an dem mindestens einen gewickelten Federabschnitt 30 vorgesehen ist.

In Figur 2 ist im Übrigen gut zu erkennen, dass sich der erste Federabschnitt 16 und der zweite Federabschnitt 22 des Federelements 10 überkreuzen. Diese Überkreuzung ermöglicht aufgrund der entstehenden Hebelverhältnisse bereits bei geringen Verschiebungen des Werkzeugangriffspunkts P in Betätigungsrichtung x vergleichsweise große Bewegungen der freien Federenden 20, 26.

Aufgrund dieser vorteilhaften Konstruktion ist ein Federelement 10 mit einem ersten Federabschnitt 16, der sich von einem Werkzeugangriffspunkt P über eine erste Lagerstelle 18 bis zu einem ersten Federende 20 erstreckt, sowie einem zweiten Federabschnitt 22, der sich vom Werkzeugangriffspunkt P über eine zweite Lagerstelle 24 bis zu einem zweiten Federende 26 erstreckt, wobei sich die beiden Federabschnitte 16, 22 zwischen dem Werkzeugangriffspunkt P und ihren Federenden 20, 26, insbesondere zwischen ihren Lagerstellen 18, 24 und ihren Federenden 20, 26, überkreuzen, bereits für sich genommen erfinderisch.

Anhand der Seitenansichten gemäß Figur 2 wird außerdem deutlich, dass sich das Federelement 10 im Wesentlichen in einer Federebene E erstreckt, wobei eine Lenkachse S des Fahrzeuglenkrads 14 (siehe Figur 8) im Wesentlichen senkrecht zu dieser Federebene E verläuft. Quer zur Federebene E entspricht eine Abmessung des Federelements 10 überwiegend einem Durchmesser des Federdrahts. Lediglich im Bereich der Überkreuzung und des wenigstens einen schraubenförmig gewickelten Federabschnitts 30 entspricht die Abmessung quer zur Federebene E etwa dem doppelten Durchmesser des Federdrahts. Mit Bezug auf die Lenkachse S ist der Bauraumbedarf des Federelements 10 in axialer Richtung folglich minimal.

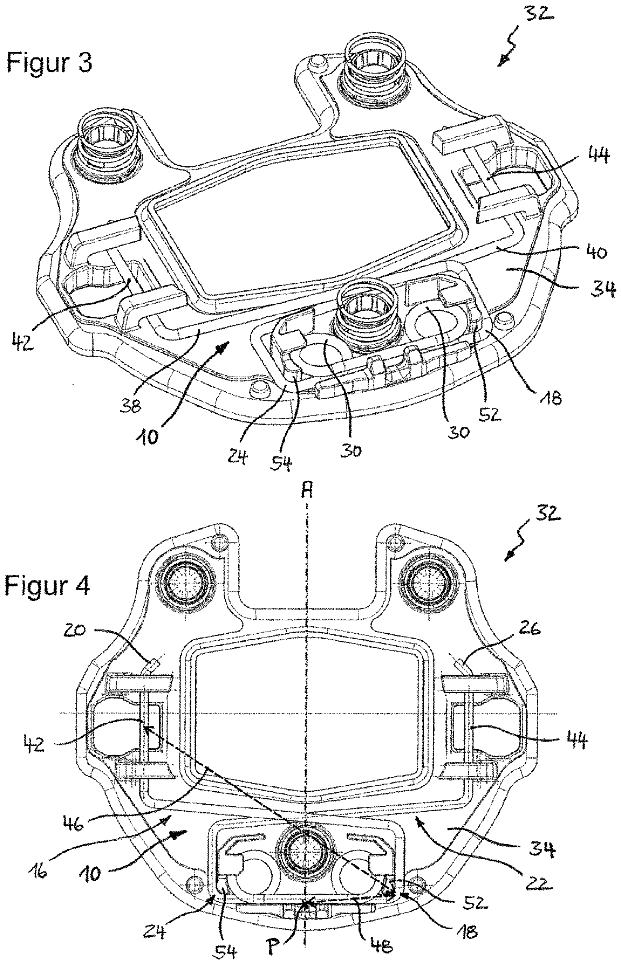

Die Figuren 3 und 4 zeigen Ansichten einer Baugruppenkomponente für eine Lenkradbaugruppe 32 gemäß den Figuren 8 und 9, wobei ein Federelement 10 gemäß den Figuren 1 und 2 an der Baugruppenkomponente montiert ist. Die Baugruppenkomponente ist im vorliegenden Ausführungsbeispiel ein separates Befestigungselement 34, welches mit dem Gassackmodul 12 oder mit einem Lenkradskelett 36 der Lenkradbaugruppe 32 fest verbunden, beispielsweise verschraubt werden kann. Alternativ ist jedoch auch denkbar, dass das Befestigungselement 34 einstückig in das Gassackmodul 12 oder Lenkradskelett 36 integriert ist, das Federelement 10 also direkt am Gassackmodul 12 oder Lenkradskelett 36 befestigt wird.

Zwischen der Lagerstelle 18, 24 und dem zugeordneten freien Federende 20, 26 der Federabschnitte 16, 22 erstreckt sich jeweils ein Federschenkel 38, 40, der einen Rastabschnitt 42, 44 aufweist. Der Rastabschnitt 42, 44 grenzt an das freie Federende 20, 26 an und erstreckt sich im vorliegenden Fall im Wesentlichen parallel zur Federachse A. Das Federelement 10 greift im Bereich der Rastabschnitte 42, 44 in Rasthaken 56 des Gassackmoduls 12 (siehe Figur 8) oder des Fahrzeuglenkrads 14 ein, um eine Rastverbindung zwischen dem Gassackmodul 12 und dem Fahrzeuglenkrad 14 herzustellen.

Die Federschenkel 38, 40 sind jeweils im Wesentlichen Z-förmig ausgebildet.

Mit Bezug auf einen Federabschnitt 16, 22 ist gemäß Figur 4 ein Abstand 46 zwischen der Lagerstelle 18, 24 und dem zugeordneten Rastabschnitt 42, 44 größer, insbesondere wenigstens dreimal größer, als ein Abstand 48 zwischen der Lagerstelle 18, 24 und dem Werkzeugangriffspunkt P. Bei einer Betätigung des Federelements 10 zur Demontage des Gassackmoduls 12 vom Fahrzeuglenkrad 14 ist folglich ein Betätigungsweg am Werkzeugangriffspunkt P deutlich kleiner als ein Entriegelungsweg der Rastabschnitte 42, 44.

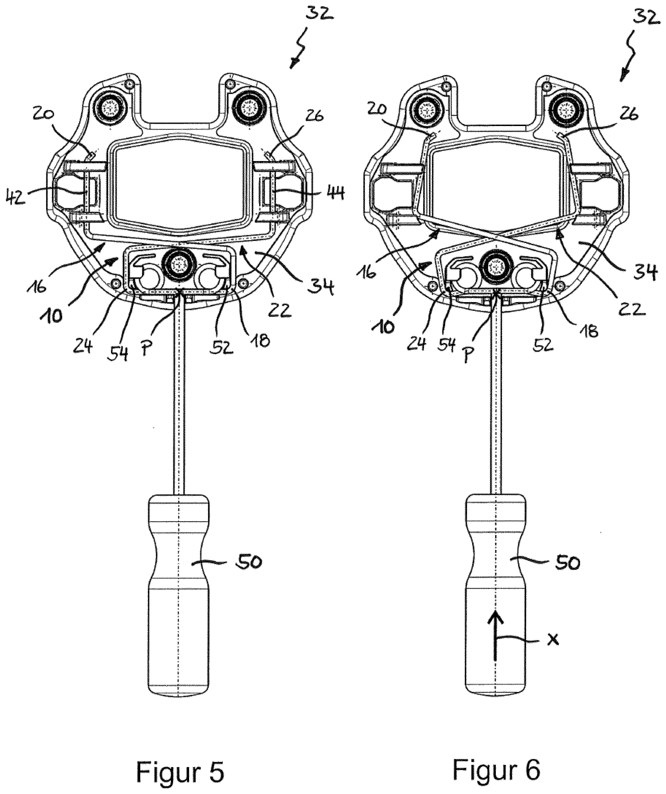

Die Figuren 5 und 6 zeigen die Baueinheit gemäß den Figuren 3 und 4, wobei am Werkzeugangriffspunkt P des Federelements 10 jeweils ein Werkzeug 50 angreift. In Figur 5 wird noch keine Kraft in Betätigungsrichtung x auf das Werkzeug 50 ausgeübt, sodass sich das Federelement 10 in seiner unbetätigten, entspannten Ruhestellung befindet, in der das Gassackmodul 12 beispielsweise sicher am Fahrzeuglenkrad 14 befestigt, insbesondere verrastet ist. In Figur 6 ist der Werkzeugangriffspunkt P über eine auf das Werkzeug 50 aufgebrachte Kraft in Betätigungsrichtung x verschoben.

Das Befestigungselement 34 weist ein an die erste Lagerstelle 18 angrenzendes Federlager 52 und ein an die zweite Lagerstelle 24 angrenzendes, weiteres Federlager 54 auf, wobei jedes Federlager 52, 54 als Drehlager ausgeführt ist. Dies bedeutet, dass sich das Federelement 10 im Bereich der Federlager 52, 54 nicht in Betätigungsrichtung x verschieben, sondern lediglich um das jeweilige Federlager 52, 54 verdrehen kann. Insbesondere ist im Bereich der Federlager 52, 54 überhaupt keine translatorische Verschiebung des Federelements 10 möglich.

Dementsprechend wird das Federelement 10 in Figur 6 durch die Bewegung des Werkzeugangriffspunkts P in Betätigungsrichtung x gespannt und elastisch so verformt, dass sich die freien Federenden 20, 26 aufeinander zu bewegen. Dabei können die Rastabschnitte 42, 44 gemäß Figur 8 beispielsweise Rasthaken 56 des Gassackmoduls 12 freigeben, sodass das Gassackmodul 12 von dem am Lenkradskelett 36 fixierten Befestigungselement 34 gelöst werden kann. Wird auf das Werkzeug 50 in Betätigungsrichtung x keine Kraft mehr ausgeübt, so entspannt sich das Federelement 10 und nimmt wieder seine Position gemäß Figur 5 ein.

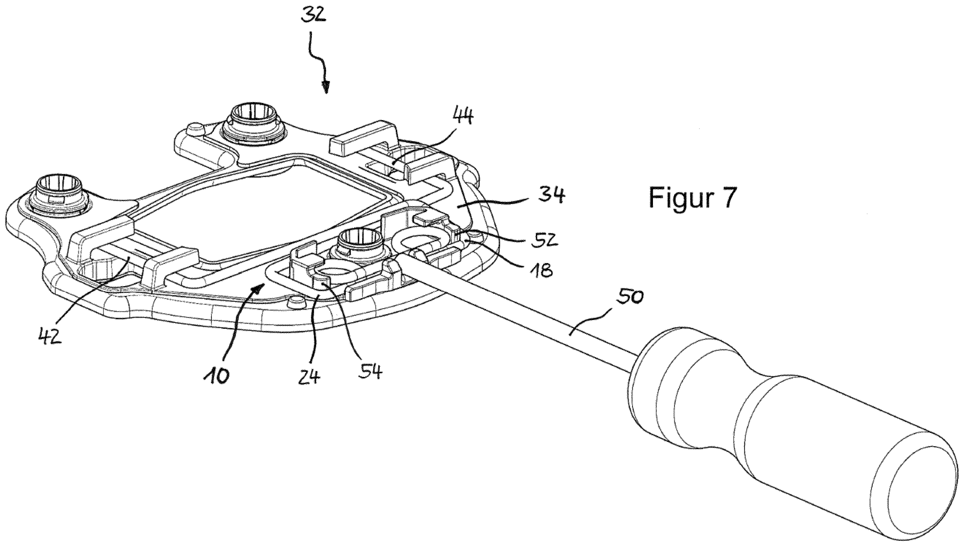

Eine perspektivische Ansicht der Baueinheit gemäß Figur 5 ist in Figur 7 dargestellt, wobei die beiden Federlager 52, 54 der als Befestigungselement 34 ausgeführten Baugruppenkomponente gut zu erkennen sind.

Die Figur 8 zeigt die Lenkradbaugruppe 32 eines Fahrzeugs, mit einem Gassackmodul 12, einem Fahrzeuglenkrad 14 und einer Baueinheit gemäß den Figuren 5 bis 7, wobei das Befestigungselement 34 der Baueinheit fest mit dem Lenkradskelett 36 des Fahrzeuglenkrads 14 verbunden ist. Das Gassackmodul 12 ist über die Rasthaken 56 und die Rastabschnitte 42, 44 des Federelements 10 am Fahrzeuglenkrad 14 befestigt.

In Figur 9 ist ein Detail der Lenkradbaugruppe 32 gemäß Figur 8 dargestellt. Hier wird deutlich, dass der Werkzeugangriffspunkt P bei einer vollständig zusammengebauten Lenkradbaugruppe 32 mit dem Werkzeug 50 problemlos erreichbar ist und durch einfachen Druck in Betätigungsrichtung x verschieblich ist, sodass das Gassackmodul 12 mit geringem Aufwand vom Fahrzeuglenkrad 14 demontiert werden kann.

## Patentansprüche

1. Federelement zur Befestigung eines Gassackmoduls (12) an einem Fahrzeuglenkrad (14), mit
einem ersten Federabschnitt (16), der sich von einem Werkzeugangriffspunkt (P) über eine erste Lagerstelle (18) bis zu einem ersten freien Federende (20) erstreckt, sowie
einem zweiten Federabschnitt (22), der sich vom Werkzeugangriffspunkt (P) über eine zweite Lagerstelle (24) bis zu einem zweiten freien Federende (26) erstreckt,
wobei der Werkzeugangriffspunkt (P) von einer Verbindungsstrecke (28) zwischen den beiden freien Federenden (20, 26) beabstandet und in einer Betätigungsrichtung (x) zur Verbindungsstrecke (28) hin verschieblich ist,
**dadurch gekennzeichnet, dass** die Federabschnitte (16, 22) so geformt sind, dass sich die freien Federenden (20, 26) bei einer Verschiebung des Werkzeugangriffspunkts (P) in der Betätigungsrichtung (x) aufeinander zu oder voneinander weg bewegen, wenn die erste Lagerstelle (18) und die zweite Lagerstelle (24) im Wesentlichen unverschieblich in Betätigungsrichtung (x) gehalten sind.

2. Federelement nach Anspruch 1, **dadurch gekennzeichnet, dass** die beiden Federabschnitte (16, 22) bezüglich einer durch den Werkzeugangriffspunkt (P) verlaufenden Federachse (A) im Wesentlichen symmetrisch ausgebildet sind, insbesondere wobei die Betätigungsrichtung (x) mit einer Axialrichtung der Federachse (A) übereinstimmt.

3. Federelement nach wenigstens einem der vorhergehenden Ansprüche, **dadurch gekennzeichnet, dass** zwischen den beiden Lagerstellen (18, 24) mindestens ein schraubenförmig gewickelter Federabschnitt (30) vorgesehen ist.

4. Federelement nach Anspruch 3, **dadurch gekennzeichnet, dass** der Werkzeugangriffspunkt (P) an dem mindestens einen gewickelten Federabschnitt (30) vorgesehen ist.

5. Federelement nach Anspruch 3, **dadurch gekennzeichnet, dass** zwischen den beiden Lagerstellen (18, 24) zwei schraubenförmig gewickelte Federabschnitte (30) vorgesehen sind, wobei der Werkzeugangriffspunkt (P) zwischen den gewickelten Federabschnitten (30) angeordnet ist.

6. Federelement nach wenigstens einem der vorhergehenden Ansprüche, **dadurch gekennzeichnet, dass** sich der erste Federabschnitt (16) und der zweite Federabschnitt (22) überkreuzen.

7. Federelement nach wenigstens einem der vorhergehenden Ansprüche, **dadurch gekennzeichnet, dass** das Federelement (10) als einstückiges Bauteil aus gebogenem Draht hergestellt ist.

8. Federelement nach wenigstens einem der vorhergehenden Ansprüche, **dadurch gekennzeichnet, dass** sich zwischen der Lagerstelle (18, 24) und dem zugeordneten freien Federende (20, 26) der Federabschnitte (16, 22) jeweils ein Federschenkel (38, 40) erstreckt, der einen Rastabschnitt (42, 44) aufweist, insbesondere wobei der Rastabschnitt (42, 44) an das freie Federende (20, 26) angrenzt.

9. Federelement nach Anspruch 8, **dadurch gekennzeichnet, dass** ein Abstand (46) zwischen der Lagerstelle (18, 24) und dem Rastabschnitt (42, 44) größer, insbesondere wenigstens dreimal größer, als ein Abstand (48) zwischen der Lagerstelle (18, 24) und dem Werkzeugangriffspunkt (P) ist.

10. Federelement nach Anspruch 8 oder 9, **dadurch gekennzeichnet, dass** der Federschenkel (38, 40) im Wesentlichen Z-förmig ausgebildet ist.

11. Lenkradbaugruppe eines Fahrzeugs, mit
einem Federelement (10) nach zumindest einem der vorhergehenden Ansprüche sowie
einer Baugruppenkomponente, an der das Federelement (10) befestigt ist,
wobei die Baugruppenkomponente ein an die erste Lagerstelle (18) angrenzendes Federlager (52) und ein an die zweite Lagerstelle (24) angrenzendes, weiteres Federlager (54) aufweist, insbesondere wobei die Federlager (52, 54) als Drehlager ausgeführt sind.

12. Lenkradbaugruppe nach Anspruch 11, **dadurch gekennzeichnet, dass** die Baugruppenkomponente ein Lenkradskelett (36), ein Gassackmodul (12) oder ein separates Befestigungselement (34) ist, welches am Lenkradskelett (36) oder am Gassackmodul (12) fest montierbar ist.

## Claims

1. A spring element for fastening an airbag module (12) to a vehicle steering wheel (14), comprising
a first spring section (16) which extends from a tool access point (P) via a first bearing point (18) to a free first spring end (20), and
a second spring section (22) which extends from a tool access point (P) via a second bearing point (24) to a free second spring end (26),
wherein the tool access point (P) is spaced apart from a connecting section (28) between the two free spring ends (20, 26) and is displaceable in an actuating direction (x) toward the connecting section (28),
**characterized in that** the spring sections (16, 22) are shaped such that the free spring ends (20, 26) move toward each other or away from each other during displacement of the tool access point (P) in the actuating direction (x), if the first bearing point (18) and the second bearing point (24) are held substantially non-displaceably in the actuating direction (x).

2. The spring element according to claim 1, **characterized in that** the two spring sections (16, 22) are substantially symmetric with respect to a spring axis (A) extending through the tool access point (P), especially wherein the actuating direction (x) coincides with an axial direction of the spring axis (A).

3. The spring element according to at least one of the preceding claims, **characterized in that** between the two bearing points (18, 24) at least one coiled spring section (30) is provided.

4. The spring element according to claim 3, **characterized in that** the tool access point (P) is provided at the at least one coiled spring section (30).

5. The spring element according to claim 3, **characterized in that** between the two bearing points (18, 24) two coiled spring sections (30) are provided, with the tool access point (P) being arranged between the coiled spring sections (30).

6. The spring element according to at least one of the preceding claims, **characterized in that** the first spring section (16) and the second spring section (22) intersect.

7. The spring element according to at least one of the preceding claims, **characterized in that** the spring element (10) is made from bent wire as a one-piece component.

8. The spring element according to at least one of the preceding claims, **characterized in that** a respective spring leg (38, 40) which includes a retaining portion (42, 44) extends between the bearing point (18, 24) and the associated free spring end (20, 26) of the spring sections (16, 22), especially wherein the retaining portion (42, 44) abuts on the free spring end (20, 26).

9. The spring element according to claim 8, **characterized in that** a space (46) between the bearing point (18, 24) and the retaining portion (42, 44) is larger, especially at least three times larger, than a space (48) between the bearing point (18, 24) and the tool access point (P).

10. The spring element according to claim 8 or 9, **characterized in that** the spring leg (38, 40) is substantially Z-shaped.

11. A steering wheel assembly of a vehicle, comprising
a spring element (10) according to at least one of the preceding claims as well as
an assembly component to which the spring element (10) is fastened,
wherein the assembly component has a spring bearing (52) abutting on the first bearing point (18) and another spring bearing (54) abutting on the second bearing point (24), especially wherein the spring bearings (52, 54) are in the form of pivot bearings.

12. The steering wheel assembly according to claim 11, **characterized in that** the assembly component is a steering wheel skeleton (36), an airbag module (12) or a separate fastening element (34) which can be tightly mounted to the steering wheel skeleton (36) or to the airbag module (12).

## Revendications

1. Elément ressort pour la fixation d'un module airbag (12) sur un volant de véhicule (14), comprenant
une première partie de ressort (16) qui s'étend depuis un point d'engagement d'outil (P) via un premier point d'appui (18) jusqu'à une première extrémité de ressort libre (20), et
une seconde partie de ressort (22) qui s'étend depuis le point d'engagement de l'outil (P) via un second point d'appui (24) jusqu'à une seconde extrémité de ressort libre (26),
pour lequel le point d'engagement d'outil (P) est espacé d'un chemin de connexion (28) entre les deux extrémités de ressort libres (20, 26) et est déplaçable dans une direction d'actionnement (x) vers la section de connexion (28),
**caractérisé en ce que** les parties de ressort (16, 22) sont formées, de telle sorte que les extrémités libres de ressort (20, 26) se rapprochent ou s'éloignent l'une de l'autre lors du déplacement du point d'engagement d'outil (P) dans la direction d'actionnement (x) lorsque le premier point d'appui (18) et le second point d'appui (24) sont maintenus sensiblement non déplaçables dans la direction d'actionnement

2. Elément ressort selon la revendication 1, **caractérisé en ce que** les deux parties de ressort (16, 22) sont formées sensiblement symétriques par rapport à un axe de ressort (A) s'étendant à travers le point d'engagement d'outil (P), en particulier pour lequel la direction d'actionnement (x) coïncide avec une direction axiale de l'axe de ressort (A).

3. Elément ressort selon au moins l'une des revendications précédentes, **caractérisé en ce qu'**au moins une partie de ressort (30) enroulée en hélice est prévue entre les deux points d'appui (18, 24).

4. Elément de ressort selon la revendication 3, **caractérisé en ce que** le point d'engagement de l'outil (P) est prévu au niveau de l'au moins une partie de ressort enroulée (30).

5. Elément de ressort selon la revendication 3, **caractérisé en ce que** deux parties de ressort enroulées en hélice (30) sont prévues entre les deux points d'appui (18, 24), pour lequel le point d'engagement de l'outil (P) est disposé entre les parties de ressort enroulées (30).

6. Elément ressort selon au moins l'une des revendications précédentes, **caractérisé en ce que** la première partie de ressort (16) et la deuxième partie de ressort (22) se croisent.

7. Elément ressort selon au moins l'une des revendications précédentes, **caractérisé en ce que** l'élément de ressort (10) est fabriqué en tant que composant monobloc à partir de fil plié.

8. Elément ressort selon au moins l'une des revendications précédentes, **caractérisé en ce qu'**entre le point d'appui (18, 24) et l'extrémité libre associée (20, 26) des parties de ressort (16, 22) s'étend à chaque fois une branche de ressort (38, 40), laquelle présente une section d'encliquetage (42, 44), pour lequel en particulier la section d'encliquetage (42, 44) est adjacente à l'extrémité libre (20, 26) du ressort.

9. Elément ressort selon la revendication 8, **caractérisé en ce qu'**une distance (46) entre le point d'appui (18, 24) et la section d'encliquetage (42, 44) est plus grande, en particulier au moins trois fois plus grande, qu'une distance (48) entre le point d'appui (18, 24) et le point d'engagement de l'outil (P).

10. Elément ressort selon la revendication 8 ou 9, **caractérisé en ce que** la branche de ressort (38, 40) est sensiblement en forme de Z.

11. Ensemble volant de direction d'un véhicule, comprenant
un élément ressort (10) selon au moins l'une des revendications précédentes, ainsi qu'
un composant d'assemblage auquel l'élément ressort (10) est fixé,
pour lequel le composant d'assemblage comprend un palier à ressort (52) adjacent au premier point d'appui (18) et un autre palier à ressort (54) adjacent au deuxième point d'appui (24), en particulier pour lequel les paliers à ressort (52, 54) sont conçus comme des paliers de pivotement.

12. Ensemble volant de direction selon la revendication 11, **caractérisé en ce que** le composant d'assemblage est une armature de volant (36), un module airbag (12) ou un élément de fixation séparé (34), lequel peut être monté de manière fixe sur l'armature de volant (36) ou sur le module airbag (12).
